# EUROPEAN PATENT APPLICATION

(11) **EP 4 546 840 A1**
(43) Date of publication of application: **30.04.2025**
(21) Application number: 23841733.1
(22) Date of filing: 21.02.2023
(51) Int. Cl.: H04W 12/06

(54) **CONFIGURATION DATA ACTIVATION METHOD AND APPARATUS, ELECTRONIC DEVICE, AND STORAGE MEDIUM**

(30) Priority: 20.07.2022 CN 202210859889
(71) Applicant: ZTE CORPORATION, Shenzhen, Guangdong 518057 (CN)
(72) Inventor: FENG, Junying, Shenzhen, Guangdong 518057 (CN)
(74) Representative: Canzler & Bergmeier Patentanwälte Partnerschaft mbB
(86) International application number: PCT/CN2023/077352
(87) International publication number: WO 2024/016655

(57) **Abstract**

The present disclosure relates to a configuration data activation method and apparatus, an electronic device, and a storage medium. The method comprises: acquiring configuration data modified by a target network element; according to the configuration data, determining a license control item set associated with the target network element, wherein the license control item set comprises one or more license control items to be authenticated, and license control item information corresponding to each license control item to be authenticated; determining a license control item increment set corresponding to the target network element according to the license control item information; authenticating each license control item to be authenticated in the license control item increment set; and if each license control item is successfully authenticated, the configuration data of the target network element being successfully activated.

## Description

### CROSS REFERENCE TO RELATED APPLICATIONS

The present disclosure claims the priority to Chinese Patent Application No. CN202210859889.3 entitled "METHOD AND APPARATUS FOR ACTIVATING CONFIGURATION DATA, ELECTRONIC DEVICE, AND STORAGE MEDIUM" and filed on July 20, 2022, the contents of which are incorporated herein by reference in their entirety.

### TECHNICAL FIELD

The present disclosure relates to the field of communications, and in particular, to a method and an apparatus for activating configruation data, an electronic device, and a storage medium.

### BACKGROUND

Software license management is a kind of license management, and a user may acquire corresponding network functions and performance resources according to an applied license file. The license management provides the corresponding network functions and capacity through a software control method, and an operator may purchase a corresponding number of licenses according to increase and development of network traffic, so as to expand a network and upgrade the network. However, there is a technical problem of low activation efficiency of increment configuration data in conventional license management and control solutions.

### SUMMARY

In view of the above, in order to solve the technical problem or part of the technical problem, the present disclosure provides a method and an apparatus for activating configuration data, an electronic device, and a storage medium.

In a first aspect, the present disclosure provides a method for activating configuration data, including: acquiring the configuration data modified by a target network element; determining a license control item set associated with the target network element according to the configuration data, wherein the license control item set includes one or more license control items to be authenticated and license control item information corresponding to each license control item to be authenticated; determining a license control item increment set corresponding to the target network element according to the license control item information; authenticating each license control item to be authenticated in the license control item increment set; and if each license control item to be authenticated is successfully authenticated, indicating that activation of the configuration data of the target network element succeeds.

In a second aspect, the present disclosure provides an apparatus for activating configuration data, including: a license usage quantity statistic module, a license adaption module, and a license-center authentication module. The license usage quantity statistic module is configured to acquire the configuration data modified by a target network element, and determine a license control item set associated with the target network element according to the configuration data, wherein the license control item set includes one or more license control items to be authenticated and license control item information corresponding to each license control item to be authenticated; the license adaptation module is configured to determine a license control item increment set corresponding to the target network element according to the license control item information; and the license-center authentication module is configured to authenticate each license control item to be authenticated in the license control item increment set, and indicate that activation of the configuration data of the target network element succeeds if each license control item to be authenticated is successfully authenticated.

### BRIEF DESCRIPTION OF DRAWINGS

FIG. 1 is a flowchart illustrating a method for activating configuration data according to the present disclosure;
FIG. 2 is a flowchart illustrating a method for activating configuration data of a network element according to the present disclosure;
FIG. 3 is a block diagram of an apparatus for activating configuration data according to the present disclosure; and
FIG. 4 is a schematic structural diagram of an electronic device according to the present disclosure.

### DETAIL DESCRIPTION OF EMBODIMENTS

In order to make the objectives, technical solutions and advantages of the present disclosure clearer, the technical solutions of the present disclosure are clearly and thoroughly described below with reference to the drawings of the present disclosure. Apparently, embodiments described herein are merely some embodiments of the present disclosure, and do not cover all embodiments. All other embodiments derived by those of ordinary skill in the art from the embodiments described herein without any inventive work fall within the scope of the present disclosure.

In order to facilitate an understanding of the present disclosure, the present disclosure will be further explained below by specific embodiments with reference to the drawings, but the embodiments do not constitute any limitation to the present disclosure.

Software license management is a kind of license management, and a user may acquire corresponding network functions and performance resources according to an applied license file. The license management provides corresponding network functions and capacity through a software control method, and an operator may purchase a corresponding number of licenses according to increase and development of network traffic, so as to expand a network and upgrade the network.

A conventional license management and control method includes: when a network element performs a service managed and controlled by a certain license, a service module calculates a total demand quantity of licenses of network elements of a whole network or network elements in a same subnet for performing such service, and sends an authentication request to a license authentication module, and the license authentication module compares a total applied quantity with an authorized quantity of the license and performs authentication, and then returns an authentication result to the service module. After the authentication is passed, the service of the network element comes into effect, and if the authentication fails, the service of the network element is interrupted. As can be seen, it is complicated to realize conventional service point management and control, a total quantity of licenses of a plurality of network elements needs to be counted for modification of a single network element, and calculation amount for each time of authentication is large.

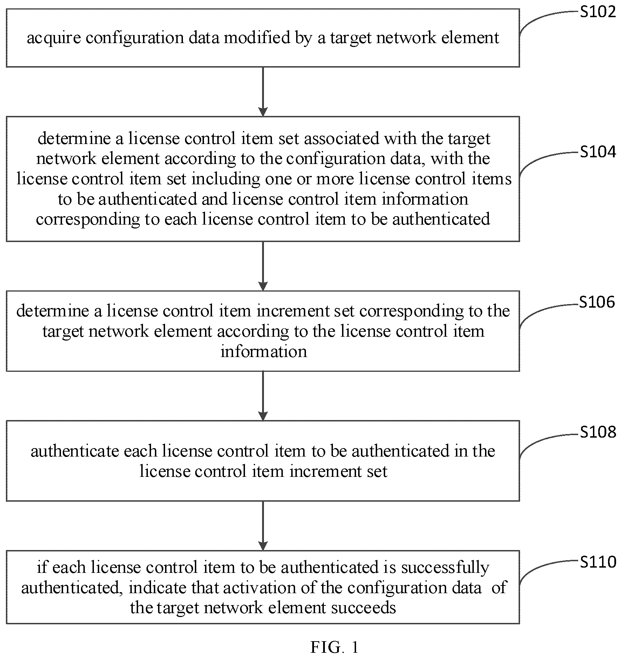

According to the present disclosure, an incremental license of increment configuration is subjected to authentication management and control after configuration of a single network element is modified, thereby achieving service management and control. FIG. 1 is a flowchart illustrating a method for activating configuration data according to the present disclosure. As shown in FIG. 1, the method for activating configuration data includes following operations S102 to S110.

At operation S102, configuration data modified by a target network element is acquired.

In an embodiment, the target network element may be a single network element or a plurality of network elements, and an operation of simultaneously activating the configuration data by the plurality of network elements can be achieved.

A license control item authorizes a specific quantity of control items. When a usage quantity of the control items is less than or equal to the authorized quantity, a service is normal, and when the usage quantity is greater than the authorized quantity, a part exceeding the authorized quantity cannot operate.

At operation S104, a license control item set associated with the target network element is determined according to the configuration data, with the license control item set including one or more license control items to be authenticated and license control item information corresponding to each license control item to be authenticated.

In an embodiment, after the network element modifies the configuration data, a license usage quantity statistical model performs a calculation on the modified configuration data, and outputs a set of all license control items related to the current modification of the configuration data. The set includes the license control item information of one or more license control items to be authenticated, and each license control item to be authenticated includes a target usage quantity and an obtained authorized quantity. Merely license control items associated with the network element is subjected to the calculation, so as to realize increment authentication of the single network element and reduce calculation amount of licenses of a network administrator.

At operation S106, a license control item increment set corresponding to the target network element is determined according to the license control item information.

In an exemplary embodiment, a license adaptation module calculates an increment application value needed by each license control item to be authenticated according to the target usage quantity and the obtained authorized quantity of each license control item to be authenticated, thereby obtaining the license control item increment set. The increment application value of license control item is equal to the target usage quantity minus the obtained authorized quantity. The increment application value of the license control item increment application value may be a positive number, zero, or a negative number.

At operation S108, each license control item to be authenticated in the license control item increment set is authenticated.

In an exemplary embodiment, a license-center authentication module performs the increment authentication on the license control item increment set of the network element.

At operation S110, if each license control item to be authenticated is successfully authenticated, activation of the configuration data the target network element succeeds.

If the increment authentication succeeds, a single-item authentication result of successful authentication is returned, thereby indicating that the activation of the configuration data succeeds.

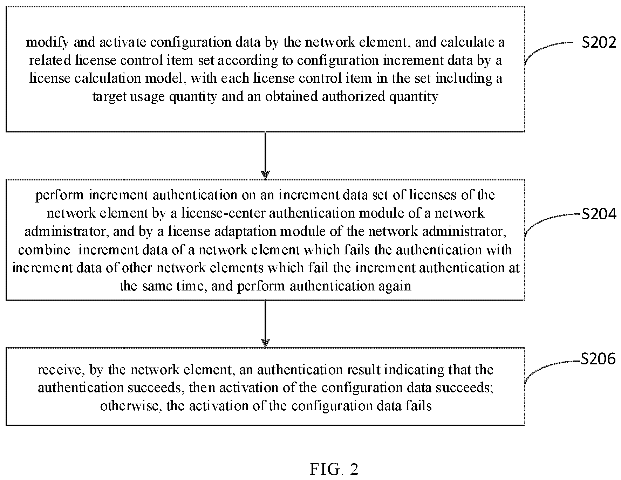

In an alternative embodiment of the present disclosure, FIG. 2 is a flowchart illustrating a method for activating configuration data of a network element according to the present disclosure. As shown in FIG. 2, the method for activating configuration data of the network element includes following operations S202 to S206.

At operation S202, the network element modifies and activates configuration data, a license calculation model calculates a related license control item set according to configuration increment data, and each license control item in the set includes a target usage quantity and an obtained authorized quantity.

At operation S204, a license-center authentication module of a network administrator performs increment authentication on an increment data set of licenses of the network element, and a license adaptation module of the network administrator combines increment data of a network element which fails the authentication with increment data of other network elements which fail the increment authentication at the same time, and then performs authentication again.

At operation S206, the network element receives an authentication result indicating that the authentication succeeds, then activation of the configuration data succeeds; otherwise, the activation of the configuration data fails.

According to the method for activating the configuration data provided in the present disclosure, the configuration data modified by the target network element is first acquired; the license control item set associated with the target network element is then determined according to the configuration data, with the set including the one or more license control items to be authenticated and the license control item information corresponding to each license control item to be authenticated; the license control item increment set corresponding to the target network element is then determined according to the license control item information; each license control item to be authenticated in the license control item increment set is authenticated; and if each license control item to be authenticated is successfully authenticated, the activation of the configuration data of the target network element succeeds. In the present embodiment, the configuration data of the single network element is subjected to calculation and authentication, with no need of performing calculation on network elements of a whole network or network elements in a same subnet. Compared with the conventional service point management and control method, the method provided in the present disclosure has advantages of simple operation and small calculation amount, greatly improves authentication efficiency and activation efficiency of the configuration data, and solves the technical problem of low activation efficiency of configuration data in the conventional license management and control solutions.

In an alternative embodiment of the present disclosure, the license control item information corresponding to the license control item to be authenticated includes the target usage quantity and the obtained authorized quantity of the license control item to be authenticated, the license control item increment set includes the increment application value corresponding to each of the one or more license control items to be authenticated, and the increment application value of each license control item to be authenticated is obtained by subtracting the authorized quantity of the license control item to be authenticated from the target usage quantity of the license control item to be authenticated.

In an embodiment, a license usage quantity calculation module receives the increment configuration data modified by the network element, then identifies the license control item set (including the one or more license control items to be authenticated) related to the increment configuration data, and calculates the target usage quantity and the obtained authorized quantity of each license control item to be authenticated in the license control item set.

The target usage quantity of the license control item is a license usage quantity obtained by a calculation based on a sum of increment configuration data to be activated and effective configuration data; and the obtained authorized quantity of the license control item is a license usage quantity obtained by a calculation based on the effective configuration data.

In an alternative embodiment of the present disclosure, the operation S108 includes: determining a current target license control item set of the license-center authentication module, with the target license control item set including one or more target license control items, a current authorized quantity and a current usage quantity of each target license control item; and authenticating each license control item to be authenticated in the license control item increment set one by one according to the current authorized quantity and the current usage quantity of each target license control item.

In an embodiment, the current target license control item set in the license-center authentication module is used for the authentication of the license control item to be authenticated, and whether the license control item to be authenticated is successfully authenticated is verified according to the current usage quantity and the current authorized quantity in the license-center authentication module.

In an embodiment, after receiving an increment application value set of the license control items obtained by calculation of the license adaptation module of the network administrator, the license-center authentication module performs the increment authentication on the license control items one by one.

In an exemplary embodiment, each license control item to be authenticated in the license control item increment set is taken as a target license control item to be authenticated, and whether the target license control item to be authenticated is authorized in the license-center authentication module is determined.

In an embodiment, if the license control item to be authenticated is not authorized in the license-center authentication module, and a state of a single-item authentication result is UNDEFINED (no definition is found). It should be understood that, if there is no control item in the target license control item set that is the same as the license control item to be authenticated, that is, the license control item to be authenticated is not defined in the license-center authentication module, the authentication of the license control item to be authenticated fails, resulting in failure of the activation of the configuration data of the network element.

In an exemplary embodiment, if the target license control item to be authenticated is not authorized in the license-center authentication module, the single-item authentication result of the target license control item to be authenticated indicates that the target license control item to be authenticated is not defined in the target license control item set.

In an exemplary embodiment, if the target license control item to be authenticated is authorized in the license-center authentication module, it is determined whether a sum of the increment application value of the target license control item to be authenticated and the usage quantity of the target license control item to be authenticated in the license-center authentication module is less than the authorized quantity of the target license control item to be authenticated in the license-center authentication module.

If the sum of the increment application value of the target license control item to be authenticated and the usage quantity of the target license control item to be authenticated in the license-center authentication module is less than the authorized quantity of the target license control item to be authenticated in the license-center authentication module, the single-item authentication result of the target authentication control item to be authenticated indicates that the authentication of the target authentication control item to be authenticated is agreed; and if the sum of the increment application value of the target license control item to be authenticated and the usage quantity of the target license control item to be authenticated in the license-center authentication module is not less than the authorized quantity of the target license control item to be authenticated in the license-center authentication module, the single-item authentication result of the target license control item to be authenticated indicates that the authentication of the target license control item to be authenticated is rejected.

It should be understood that, in a case where the license control item to be authenticated is authorized, if the sum of the increment application value and the usage value of the license control item to be authenticated in the license center is equal to or less than the authorized value of the license control item to be authenticated in the license center, the state of the single-item authentication result of the license control item to be authenticated is AGREED; and if the sum of the increment application value and the usage value of the license control item to be authenticated in the license center is greater than the authorized value of the license control item to be authenticated in the license center, the state of the single-item authentication result of the license control item to be authenticated is REJECTED.

According to the above embodiment, merely when the states of the single-item authentication results of all the license control items to be authenticated are AGREED, it is determined that the current increment authentication succeeds; otherwise, it is determined that the current increment authentication fails. **In** an exemplary embodiment, after the license-center authentication module determines that a current increment authentication request succeeds, the license-center authentication module updates the usage quantity which is locally stored of each license control item in the current increment authentication request (the usage quantity is equal to a sum of an original usage quantity and the current increment application value) one by one, and finally returns a result of the current increment authentication request to the license adaptation module of the network administrator.

In an exemplary embodiment, after the license adaptation module of the network administrator receives the authentication result fed back by the license-center authentication module, the license adaptation module of the network administrator processes different authentication results in different ways.

In a specific implementation, if each license control item to be authenticated in the license control item increment set is successfully authenticated, that is, the authentication result indicates that the authentication succeeds, the authentication result is immediately returned to the network element.

If the target license control item to be authenticated is not defined in the target license control item set, the authentication of the target license control item to be authenticated fails, and the activation of the configuration data of the target network element fails; and authentication failure information is fed back to the target network element. In an embodiment, if the authentication result indicates that the authentication fails and the state of the single-item authentication result is UNDEFINED, the authentication result is returned to the network element, and the activation of the configuration data of the network element fails.

If the single-item authentication result of the target license control item to be authenticated indicates that the authentication of the target license control item to be authenticated is rejected, the authentication of the target license control item to be authenticated fails; and the failed license control item increment set is re-authenticated by using a target license control item set which is updated in the license-center authentication module.

If the states of the single-item authentication results are AGREED and REJECTED, the network element and data of the license control item increment set thereof are placed in a retry pool of the license adaptation module of the network administrator for re-authentication.

In an specific implementation, the failed license control item increment set is placed in the retry pool, and is combined with other license control item increment sets in the retry pool that fail at the same time to obtain a combined license control item increment set; the combined license control item increment set is authenticated; if the authentication succeeds, the activation of the configuration data of the target network element succeeds; if the authentication fails, the failed license control item increment set is repeatedly placed in the retry pool and repeatedly authenticated until a number of repeated authentication times within a preset time period reaches a preset value, if the authentication still fails, the authentication is ended.

In an embodiment, if the increment authentication fails, the license adaptation module may place the network element and the set of the license control item increment values of the network element in the retry pool for retrying.

The retry pool of the license adaptation module performs a combination operation on the sets of the license control item increment values of the network elements in the retry pool which failed in a same time period and adds up increments of same license control item, so as to obtain a new set of the license control item increment values of all the failed network elements, the combined data is subjected to the increment authentication in the license center, and if the increment authentication still fails, retrying of the authentication of the single network element is performed for N times within a total time period of T1. If the increment authentication succeeds during the retrying, the retrying is ended.

In an example, authentication result data is continuously received by the retry pool of the license adaptation module during lifetime thereof; then, a timer T1is set, periodically in the time period of T1, the license control item increment sets of all the network elements in the retry pool are combined (a combination rule: based on the same license control item, adding the increment values of the control item), and increment authentication is initiated for the combined license control item increment set to the license center, that is, the authentication is repeatedly performed. If the license center returns a result of successful authentication, a result of successful authentication is returned to each network element participating in data combination, and all the network elements participating in the data combination are removed from the retry pool. In the retry pool, a single network element is limited by both the maximum number of retrying times N and the maximum retrying time period T2. If the authentication of the single network element still fails after the authentication is repeated for N times and for the time period of T2, the retrying is ended, a result of failed authentication is returned to the single network element, and the single network element is removed from the retry pool.

The present disclosure is further illustrated below by a specific embodiment.

### Scenario 1:

There are control items NR_F001 (30M cell) and NR_F002 (60M cell) in the license center, and authorized quantities and the usage quantities are as follows:

| license-center authentication module | NR_F001 (30M cell) | NR_F002 (60M cell) |
|---|---|---|
| authorized quantity | 10 | 10 |
| usage quantity | 8 | 8 |

At this time, three network elements N1 to N3 modify configuration data and simultaneously carry out activation of the configuration data.

The network element N1 adds one 30M cell; the network element N2 adds three 150M cells; and the network element N3 re-configures three of existing five 60M cells as three 30M cells. The three network elements simultaneously carry out the activation of the configuration data. The license usage quantity calculation module respectively outputs following information according to the modified configuration:
Network element N1:

| | NR_F001 (30M cell) | |
|---|---|---|
| target usage quantity of N1 | 1 | |
| obtained authorized quantity of N1 | 0 | |

| Network element N2: | | |
|---|---|---|
| | NR_F004 (150M cell) | |
| target usage quantity of N2 | 3 | |
| obtained authorized quantity of N2 | 0 | |

| Network element N3: | | |
|---|---|---|
| | NR_F001 (150M cell) | NR_F002 (60M cell) |
| target usage quantity of N3 | 3 | 2 |
| obtained authorized quantity of N3 | 0 | 5 |

The license adaptation module of the network administrator respectively receives requests from the three network elements, calculates a license control item increment set of each network element, and initiates increment authentication requests to the license center. The license control item increment set of each network element is as follows:
Network element N1:

| | NR_F001 (30M cell) | |
|---|---|---|
| increment application value of N1 | 1 | |

| Network element N2: | | |
|---|---|---|
| | NR_F004 (150M cell) | |
| increment application value of N2 | 3 | |

| Network element N3: | | |
|---|---|---|
| | NR_F001 (30M cell) | NR_F002 (60M cell) |
| increment application value of N2 | 3 | -3 |

The license center respectively performs authentication in response to the increment authentication requests of the three network elements, and the authentication results are as follows:
the network element N1 passes the authentication;
the authentication of the network element N2 fails, and a single-item authentication state of NR_F004 is UNDEFINED; and
the authentication of the network element N3 fails, a single-item authentication state of NR_F001 is REJECTED, and a single-item authentication state of NR_F002 is AGREED.

At this time, the control items in the license center are as follows:

| license-center authentication module | NR_F001 (30M cell) | NR_F002 (60M cell) |
|---|---|---|
| authorized quantity | 10 | 10 |
| usage quantity | 9 | 8 |

The license adaptation module of the network administrator returns the authentication results to the network elements N1 and N2. The activation of the configuration data of the network element N1 succeeds, and the activation of the configuration data of the network element N2 fails.

The license adaptation module of the network administrator places the network element N3, the license control item set of the network element N3, and the increment application value set of the network element N3 in the retry pool. After waiting for the time period of T1, the retry pool which merely contains the network element N3 at this time combines the license control item increment set of the network element N3 and initiates an increment authentication request to the license center, and the authentication still fails. The retry pool continues to wait for one time period of T1.

During the time period of T1, a network element N4 re-configures current four 30M cells as four 60M cells, has an addition of one 60M cell, and carries out activation of configuration data.

The license usage quantity calculation module outputs following information according to the modified configuration:
Network element N4:

| | NR_F001 (30M cell) | NR_F002 (60M cell) |
|---|---|---|
| target usage quantity of N4 | 0 | 5 |
| obtained authorized quantity of N4 | 4 | 0 |

The license adaptation module of the network administrator receives a request from the network element N4, calculates a license control item increment set of the network element N4, and initiates an increment authentication request to the license center. The license control item increment set of the network element N4 is as follows:

| | NR_F001 (30M cell) | NR_F002 (60M cell) |
|---|---|---|
| increment application value of N4 | -4 | 5 |

The license center performs authentication in response to the increment authentication request, and the authentication result is as follows:
the authentication fails, a single-item authentication state of NR_F001 is AGREED, and a single-item authentication state of NR_F002 is REJECTED.

The license adaptation module of the network administrator places the network element N4, the license control item set of the network element N4, and the increment application value set of the network element N4 in the retry pool which already contains the network element N3. After waiting for the time period of T1, the retry pool combines data of the network element N3 with data of the network element N4 to obtain a new license control item increment set, and initiates an increment authentication request to the license center.

| | NR_F001 (30M cell) | NR_F002 (60M cell) |
|---|---|---|
| increment application value of N3 | -4 | 5 |
| increment application value of N4 | 3 | -3 |
| increment application value of new increment authentication request | -1 | 2 |

The license center performs authentication in response to the current increment authentication request, and the authentication result is as follows:
the authentication succeeds, a single-item authentication state of NR_F001 is AGREED, and a single-item authentication state of NR_F002 s is AGREED.

At this time, the control items in the license center are as follows:

| license-center authentication module | NR_F001 (30M cell) | NR_F002 (60M cell) |
|---|---|---|
| authorized quantity | 10 | 10 |
| usage quantity | 8 | 10 |

The license adaptation module of the network administrator immediately removes the network elements N3 and N4 from the retry pool, and returns the authentication results of successful authentication to the network elements N3 and N4. The activation of the configuration data of each of the network element N3 and the network element N4 succeeds.

### Scenario 2:

There are control items NR_F003 (100M cell)) in the license center, and the authorized quantity and the usage quantity are as follows:

| license-center authentication module | NR_F003 (100M cell) |
|---|---|
| authorized quantity | 10 |
| usage quantity | 8 |

At this time, a network element N5 adds three 100M cells and carries out configuration activation. The license usage calculation module outputs following information according to the modified configuration:
Network element N5:

| | NR_F003 (100M cell) |
|---|---|
| target usage quantity of N5 | 3 |
| obtained authorized quantity of N5 | 0 |

The license adaptation module of the network administrator receives a request from the network element N5, calculates a license control item increment set, and initiates an increment authentication request to the license center. The license control item increment set of the network element N5 is as follows:
Network element N5:

| | NR_F003 (100M cell) |
|---|---|
| increment application value of N5 | 3 |

The license center performs authentication in response to the increment authentication request, and the authentication result is as follows: the authentication fails, and a single-item authentication state of NR_F003 is REJECTED.

The license adaptation module of the network administrator places the network element N5, the license control item set of the network element N5, and the increment application value set of the network element N5 in the retry pool. After waiting for the time period of T1, the retry pool which merely contains the network element N5 at this time combines the license control item increment set of the network element N5 and initiates an increment authentication request to the license center, and the authentication still fails. After the authentication fails for N times, the license adaptation module of the network administrator immediately returns an authentication result of failed authentication to the network element N5, and removes the network element N5 and data thereof from the retry pool.

The present disclosure provides an increment control method for network element access license control. In a 5G network administrator, a number of connected network elements becomes larger and larger. For example, at present, a known single network administrator has 50,000 connected network elements, and each network element has 10,000 configuration parameters and involves 800 license algorithms. When a user modifies several parameters and activates the modification, a license algorithm rule is triggered, the license algorithm rule is to merely calculate license control items related to the modified configuration data, and entries of license control items of the network element which need to be authenticated and the number of the license control items are output. For the activation of the configuration data of each network element, merely the license control items in the network element are counted, with no need for license calculation of other network elements, so that the calculation amount needed by license counting and authentication is greatly reduced. In addition, a retry mechanism is introduced into an authentication process, and a network element which fails the authentication is combined with other network elements for retrying authentication for multiple times, so that success rate of the authentication can be improved, thereby improving success rate of the activation of the configuration data.

Based on the method for activating the configuration data provided in the above embodiments, an embodiment of the present disclosure further provides an apparatus for activating the configuration data based on the same inventive concept for implementing the above embodiments and preferable implementations, and what is illustrated above will not be repeated here. The term "module" used below refers to software, hardware, or a combination of software and hardware that can perform predetermined functions. Although the apparatus described in the following embodiment is preferably implemented by software, the implementations of the apparatus by hardware or a combination of software and hardware are possible and can be conceived.

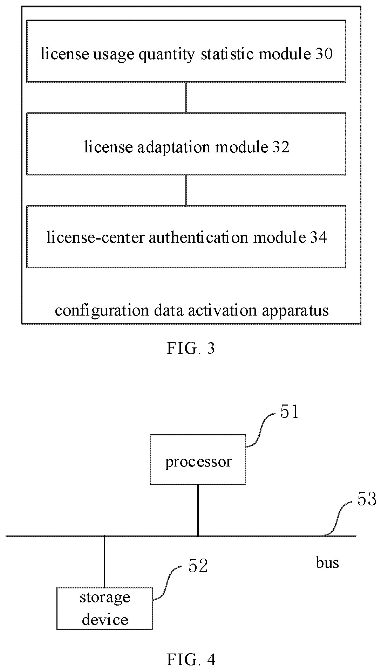

FIG. 3 is a block diagram of an apparatus for activating the configuration data according to the present disclosure, and the apparatus includes a license usage quantity statistic module 30, a license adaptation module 32, and a license-center authentication module 34.

The license usage quantity statistic module 30 is configured to acquire configuration data modified by a target network element, and determine a license control item set associated with the target network element according to the configuration data, with the license control item set including one or more license control items to be authenticated and license control item information corresponding to each license control item to be authenticated. The license adaptation module 32 is configured to determine a license control item increment set corresponding to the target network element according to the license control item information. The license-center authentication module 34 is configured to authenticate each license control item to be authenticated in the license control item increment set, and indicate that activation of the configuration data of the target network element succeeds if each license control item to be authenticated is successfully authenticated.

In an exemplary embodiment, the license control item information corresponding to the license control item to be authenticated includes a target usage quantity of the license control item to be authenticated and an obtained authorized quantity of the license control item to be authenticated, the license control item increment set includes an increment application value corresponding to each of the one or more license control items to be authenticated, and the increment application value of each license control item to be authenticated is obtained by subtracting the authorized quantity of the license control item to be authenticated from the target usage quantity by the license adaption module 32.

In an exemplary embodiment, the license-center authentication module 34 includes: a determination unit and an authentication unit. The determination unit is configured to determine a current target license control item set of the license-center authentication module 34, with the target license control item set including one or more target license control items, a current authorized quantity and a current usage quantity of each target license control item; and the authentication unit is configured to authenticate each license control item to be authenticated in the license control item increment set one by one according to the current authorized quantity and the current usage quantity of each target license control item.

In an exemplary embodiment, the authentication unit includes: a first determination sub-unit, which is configured to take each license control item to be authenticated in the license control item increment set as a target license control item to be authenticated, and determine whether the target license control item to be authenticated is authorized in the license-center authentication module; a second determination sub-unit, which is configured to indicate in a single-item authentication result of the target license control item to be authenticated that the target license control item to be authenticated is not defined in the target license control item set in a case where the target license control item to be authenticated is not authorized in the license-center authentication module; and a third determination sub-unit, which is configured to determine, in a case where the target license control item to be authenticated is authorized in the license-center authentication module, whether a sum of the increment application value of the target license control item to be authenticated and the usage quantity of the target license control item to be authenticated in the license-center authentication module is less than the authorized quantity of the target license control item to be authenticated in the license-center authentication module, indicate, if the sum of the increment application value of the target license control item to be authenticated and the usage quantity of the target license control item to be authenticated in the license-center authentication module is less than the authorized quantity of the target license control item to be authenticated in the license-center authentication module, in the single-item authentication result of the target license control item to be authenticated that the authentication of the target authentication control item to be authenticated is agreed, and indicate, if the sum of the increment application value of the target license control item to be authenticated and the usage quantity of the target license control item to be authenticated in the license-center authentication module is not less than the authorized quantity of the target license control item to be authenticated in the license-center authentication module, that the authentication of the target license control item to be authenticated is rejected.

In an exemplary embodiment, the license-center authentication module 34 is configured to determine, in a case where the target license control item to be authenticated is not defined in the target license control item set, that the authentication of the target license control item to be authenticated fails and the activation of the configuration data of the target network element fails, and feed authentication failure information back to the target network element.

In an exemplary embodiment, the license-center authentication module 34 is configured to determine, in a case where the single-item authentication result of the target license control item to be authenticated indicates that the authentication of the target license control item to be authenticated is rejected, that the authentication of the target license control item to be authenticated fails, and re-authenticate the failed license control item increment set again by using a target license control item set updated in the license-center authentication module 34.

In an exemplary embodiment, the license-center authentication module 34 is further configured to: place the failed license control item increment set in a retry pool, and combine the failed license control item increment set with other license control item increment sets in the retry pool that fail at the same time to obtain a combined license control item increment set; authenticate the combined license control item increment set; if the authentication succeeds, determine that the activation of the configuration data of the target network element succeeds; and if the authentication fails, repeatedly place the failed license control item increment set in the retry pool and repeatedly authenticate the failed license control item increment set until a number of repeated authentication times within a preset time period reaches a preset value, and end the authentication if the authentication still fails.

It should be noted that each of the above modules may be implemented by software or hardware, and when implemented by hardware, the modules may be implemented in a following way: all the modules are located in a same processor; or the modules are separately located in different processors. However, the implementation of the above modules is not limited thereto.

An embodiment of the present disclosure further provides a storage medium having a computer program stored therein, and the computer program is configured to perform, when being run, the operations in any of the above method embodiments.

In an exemplary embodiment, the storage medium may be configured to store a computer program for performing the following operations.

At operation S1, acquiring configuration data modified by a target network element; at operation S2, determining a license control item set associated with the target network element according to the configuration data, with the license control item set including one or more license control items to be authenticated and license control item information corresponding to each license control item to be authenticated; at operation S3, determining a license control item increment set corresponding to the target network element according to the license control item information; at operation S4, authenticating each license control item to be authenticated in the license control item increment set; and at operation S5, if each license control item to be authenticated is successfully authenticated, indicating that activation of the configuration data of the target network element succeeds.

In an exemplary embodiment, the above storage medium may include, but is not limited to, various media capable of storing a computer program, such as a Universal Serial Bus Flash Disk (a USB flash disk), a Read-Only Memory (ROM), a Random Access Memory (RAM), a mobile hard disk, a magnetic disk, and an optical disc.

Based on the above embodiments of the method shown in FIG. 1 and the apparatus shown in FIG. 3, the present disclosure further provides an electronic device in order to achieve the above objective. As shown in FIG. 4, the electronic device includes a storage device 52 and a processor 51, the storage device 52 and the processor 51 are both disposed on a bus 53, the storage device 52 stores a computer program, and the processor 51 implements the configuration data activation method shown in FIG. 1 when executing the computer program.

Based on such understanding, the technical solutions of the present disclosure may be embodied in the form of a software product, which may be stored in a storage device (which may be a Compact Disc Read Only Memory (CD-ROM), a USB flash disk, or a mobile hard disk), and includes a plurality of instructions for causing an electronic device (which may be a personal computer, a server, or a network device) to implement the method described in each implementation of the present disclosure.

In an exemplary embodiment, the device may be connected to a user interface, a network interface, a camera, a Radio Frequency (RF) circuit, a sensor, an audio circuit, a WI-FI module, etc. The user interface may include a display and an input unit such as a keyboard; and optionally, the user interface may include a USB interface and a card reader interface. Optionally, the network interface may include a standard wired interface and a standard wireless interface (e.g., a Bluetooth interface, and a WI-FI interface).

It should be understood by those of ordinary skill in the art that the structure of the electronic device provided in the present embodiment does not constitute any limitation to the physical device, and the electronic device may include more or fewer components, or may have some components combined, or may have the components arranged in a different way.

In an exemplary embodiment, reference may be made to the examples described in the above embodiments and optional implementations for specific examples of the present embodiment, and thus the specific examples of the present embodiment are not described in detail here.

According to the method for activating configuration data provided in the present disclosure, the configuration data modified by the target network element is first acquired; the license control item set associated with the target network element is then determined according to the configuration data, with the set including the one or more license control items to be authenticated and the license control item information corresponding to each license control item to be authenticated; the license control item increment set corresponding to the target network element is then determined according to the license control item information; each license control item to be authenticated in the license control item increment set is authenticated; and if each license control item to be authenticated is successfully authenticated, the activation of the configuration data of the target network element succeeds. In the present embodiment, the configuration data of the single network element is subjected to calculation and authentication, with no need perform calculation on the network elements of the whole network or the network elements in the same subnet. Compared with the conventional service point management and control method, the method provided in the present disclosure has the advantages of simple operation and small calculation amount, greatly improves the authentication efficiency and the activation efficiency of the configuration data, and solves the technical problem of low activation efficiency of configuration data in the conventional license management and control solutions.

Apparently, it should be understood by those of ordinary skill in the art that all the modules or operations of the present disclosure described above may be implemented by a general-purpose computing device, may be integrated in a single computing device or distributed on a network composed of a plurality of computing devices. In an exemplary embodiment, all the modules or operations of the present disclosure described above may be implemented by program codes executable by a computing device, such that the modules or operations can be stored in a storage device and executed by a computing device. In some cases, the operations illustrated or described may be performed in an order different from that described herein. The modules or operations may be separately made into integrated circuit modules, or some of the modules or operations may be made into a single integrated circuit module. Thus, the present disclosure is not limited to any specific combination of hardware and software.

The description above is merely of the preferable embodiments of the present disclosure, but is not intended to limit the present disclosure. Various modifications and changes may be made to the present disclosure by those of ordinary skill in the art. Any modification, equivalent replacement and improvement made within the principle of the present disclosure should be included in the protection scope of the present disclosure.

## Claims

1. A method for activating configuration data, comprising:
acquiring the configuration data modified by a target network element;
determining a license control item set associated with the target network element according to the configuration data, wherein the license control item set comprises one or more license control items to be authenticated and license control item information corresponding to each license control item to be authenticated;
determining a license control item increment set corresponding to the target network element according to the license control item information;
authenticating each license control item to be authenticated in the license control item increment set; and
if each license control item to be authenticated is successfully authenticated, indicating that activation of the configuration data of the target network element succeeds.

2. The method of claim 1, wherein the license control item information corresponding to each license control item to be authenticated comprises a target usage quantity and an obtained authorized quantity of the license control item to be authenticated, the license control item increment set comprises an increment application value corresponding to each of the one or more license control items to be authenticated, and the increment application value of each license control item to be authenticated is obtained by subtracting the authorized quantity of the license control item to be authenticated from the target usage quantity of the license control item to be authenticated.

3. The method of claim 1, wherein authenticating each license control item to be authenticated in the license control item increment set comprises:
determining a current target license control item set of a license-center authentication module, wherein the target license control item set comprises one or more target license control items, a current authorized quantity and a current usage quantity of each target license control item; and
authenticating each license control item to be authenticated in the license control item increment set one by one according to the current authorized quantity and the current usage quantity of each target license control item.

4. The method of claim 3, wherein authenticating each license control item to be authenticated in the license control item increment set one by one according to the current authorized quantity and the current usage quantity of each target license control item comprises:
taking each license control item to be authenticated in the license control item increment set as a target license control item to be authenticated, and determining whether the target license control item to be authenticated is authorized in the license-center authentication module;
if the target license control item to be authenticated is not authorized in the license-center authentication module, indicating in a single-item authentication result of the target license control item to be authenticated that the target license control item to be authenticated is not defined in the target license control item set;
if the target license control item to be authenticated is authorized in the license-center authentication module, determining whether a sum of an increment application value of the target license control item to be authenticated and a usage quantity of the target license control item to be authenticated in the license-center authentication module is less than an authorized quantity of the target license control item to be authenticated in the license-center authentication module; and
if the sum of the increment application value of the target license control item to be authenticated and the usage quantity of the target license control item to be authenticated in the license-center authentication module is less than the authorized quantity of the target license control item to be authenticated in the license-center authentication module, indicating in the single-item authentication result of the target authentication control item to be authenticated that authentication of the target authentication control item to be authenticated is agreed; and if the sum of the increment application value of the target license control item to be authenticated and the usage quantity of the target license control item to be authenticated in the license-center authentication module is not less than the authorized quantity of the target license control item to be authenticated in the license-center authentication module, indicating in the single-item authentication result of the target license control item to be authenticated that the authentication of the target license control item to be authenticated is rejected.

5. The method of claim 4, further comprising:
if the target license control item to be authenticated is not defined in the target license control item set, determining that the authentication of the target license control item to be authenticated fails and the activation of the configuration data of the target network element fails; and
feeding authentication failure information back to the target network element.

6. The method of claim 4, further comprising:
if it is indicated in the single-item authentication result of the target license control item to be authenticated that the authentication of the target license control item to be authenticated is rejected, determining that the authentication of the target license control item to be authenticated fails; and
re-authenticating a failed license control item increment set by using ad target license control item set updated in the license-center authentication module.

7. The method of claim 6, wherein re-authenticating the failed license control item increment set by using the target license control item set updated in the license-center authentication module comprises:
placing the failed license control item increment set in a retry pool, and combining the failed license control item increment set with other license control item increment sets in the retry pool that fail at the same time to obtain a combined license control item increment set;
authenticating the combined license control item increment set; and
if authentication of the combined license control item increment set succeeds, determining that the activation of the configuration data of the target network element succeeds; and if the authentication of the combined license control item increment set fails, repeatedly placing the failed license control item increment set in the retry pool, repeatedly authenticating the failed license control item increment set until a number of repeated authentication times within a preset time period reaches a preset value, and ending the authentication if the authentication still fails.

8. A apparatus for activating configuration data, comprising:
a license usage quantity statistic module, which is configured to acquire the configuration data modified by a target network element, and determine a license control item set associated with the target network element according to the configuration data, wherein the license control item set comprises one or more license control items to be authenticated and license control item information corresponding to each license control item to be authenticated;
a license adaptation module, which is configured to determine a license control item increment set corresponding to the target network element according to the license control item information; and
a license-center authentication module, which is configured to authenticate each license control item to be authenticated in the license control item increment set, and indicate that activation of the configuration data of the target network element succeeds if each license control item to be authenticated is successfully authenticated.

9. A computer device, comprising a storage device, a processor, and a computer program which is stored on the storage device and is executable on the processor, wherein the processor performs operations of the method of any one of claims 1 to 7 when executing the computer program.

10. A computer-readable storage medium having stored therein a computer program which, when executed by a processor, performs operations of the method of any one of claims 1 to 7.
